Europäisches Patentamt

European Patent Office

Office européen des brevets

(19)

(11) Veröffentlichungsnummer: **0 499 676 A1**

# (12) EUROPÄISCHE PATENTANMELDUNG

(21) Anmeldenummer: **91102584.9**

(22) Anmeldetag: **22.02.91**

(51) Int. Cl.5: **B29C 45/14**, B29C 45/42

(43) Veröffentlichungstag der Anmeldung:
**26.08.92 Patentblatt 92/35**

(84) Benannte Vertragsstaaten:
**CH DE ES FR LI SE**

(71) Anmelder: **SYSTEC ENGINEERING KNAUER GMBH & CO. KG**
**Schützenstrasse 25**
**W-7432 Bad Urach(DE)**

(72) Erfinder: **Döbler, Walter**
**Burgbergstrasse 10**
**W-7432 Bad Urach/Seeburg(DE)**

(74) Vertreter: **Patentanwälte Grünecker, Kinkeldey, Stockmair & Partner**
**Maximilianstrasse 58**
**W-8000 München 22(DE)**

(54) **Verfahren zum Einlegen einer Hüllfolie in eine Formhälfte eines Werkzeuges einer Spritzgussmaschine.**

(57) Beim Herstellen von spritzgegossenen Bechern läßt sich die Zeit zum Einlegen einer mit einzuspritzenden Hüllfolie in eine Werkzeughälfte verkürzen, indem man die Hüllfolie bereits außerhalb des Werkzeuges auf einem Einlegeorgan (16) lösbar fixiert. Das Einlegeorgan (16) wird dann mit seinem Schwerpunkt ausschließlich auf einer zumindest annähernd kreisförmigen Bahn außerhalb des Werkzeuges bis in die eine Formhälfte (12) hereingeschwenkt. Auf diese Weise läßt sich außerdem der Öffnungsweg der Werkzeuge auf ein Minimum begrenzen.

FIG.4

Xerox Copy Centre

EP 0 499 676 A1

Die Erfindung bezieht sich auf ein Verfahren zum Einlegen einer Hüllfolie in eine Formhälfte, insbesondere eine Matrize, eines Werkzeuges einer Spritzgußmaschine, bei dem man die Hüllfolie bei geöffnetem Werkzeug in den Raum zwischen den beiden Formhälften einbringt und von dort in eine der Formhälften einlegt.

Verfahren und Vorrichtungen in dieser Art sind aus der Praxis bekannt. Es handelt sich hier insbesondere um solche Verfahren, mit denen Kunststoffbecher, sei es in zylindrischer oder in rechteckiger Form, hergestellt werden sollen. Hierzu wird in die Matrize eine bereits bedruckte Hüllfolie eingelegt, die später bei dem Becher nicht nur die Funktion der Wand, sondern auch die des Etiketts ausüben soll. An das Einlegen dieser Hüllfolie in die Matrize werden hohe Anforderungen gestellt, da die Qualität des späteren Bechers in starkem Maße von der Positioniergenauigkeit der Folie abhängt. Man hat daher versucht, die Hüllfolien mit Handhabungsrobotern in die Matrize einzulegen. Hierdurch verlangsamt sich allerdings die Verarbeitungsgeschwindigkeit der Spritzgußmaschine, da aus Sicherheitsgründen das Werkzeug zuerst vollständig geöffnet werden muß, bevor der Arm des Handhabungsroboters in den Raum zwischen den beiden Werkzeughälften eingreifen darf.

Es ist daher Aufgabe der vorliegenden Erfindung, ein Verfahren der eingangs genannten Art so weiterzubilden, daß die Taktzeiten der Spritzgußmaschine durch das Einlegen der Hüllfolie möglichst nicht verlängert werden.

Diese Aufgabe wird erfindungsgemäß dadurch gelöst, daß man die Hüllfolie bereits außerhalb des Werkzeuges auf einem Einlegeorgan lösbar fixiert und dann das Einlegeorgan mit seinem Schwerpunkt ausschließlich auf einer zumindest annähernd kreisförmigen Bahn von außerhalb des Werkzeuges bis in die eine Formhälfte schwenkt, wobei die Schwenkbewegung des Einlegeorgans über eine ein- und ausrückbare Kupplung zwangsweise mit der Öffnungs- und Schließbewegung des Werkzeuges gekoppelt ist.

Da man die Hüllfolie außerhalb des Werkzeuges auf dem Einlegeorgan befestigt, kann dies während des Spritzgußprozeß, bei geschlossenem Werkzeug geschehen. Bei geöffnetem Werkzeug, also dann, wenn das Werkstück ausgeworfen wird, braucht lediglich das Einlegeorgan auf der kreisförmigen Bahn in die eine Formhälfte eingeschwenkt zu werden, um die Hüllfolie abzugeben. Das Einschwenken des Einlegeorgans auf einer Kreisbahn kann sehr schnell erfolgen, da die Anzahl der Beschleunigungsund Abbremsvorgänge gegenüber anderen Verfahren drastisch reduziert wird. Zudem benötigt eine solche zwangsgekoppelte Einschwenkbewegung auf einer Kreisbahn sehr wenig Raum und Zeit, da mit dem Einschwenken bereits beim Öffnen des Werkzeugs begonnen werden kann.

Je nachdem, welche Art von Becher und welche Art von Hüllfolien in die Werkzeughälfte eingelegt werden sollen, kann es günstig sein, wenn man das Einlegeorgan auf der Kreisbahn parallel zu sich selbst bewegt. Hierdurch wird der eingangs erwähnte Vorteil der Minimierung der Brems- und Beschleunigungsvorgänge einerseits beibehalten, andererseits wird dem Verfahren ein größerer Anwendungsbereich erschlossen.

Eine weitere Verkürzung der Einlegezeiten läßt sich dadurch erreichen, daß man die Hüllfolien beim Transport auf die Einlegeorgane festsaugt und beim Einlegen in die Formhälfte von den Einlegeorganen abbläst.

Insbesondere bei der Herstellung im wesentlichen zylindrischer Becher kann es günstig sein, wenn man die Hüllfolien beim Anbringen an dem, vorzugsweise als Saughaltedorn ausgebildeten, Einlegeorgan an ihren Enden gespannt hält und zunächst ungefähr mit der Mitte der Hüllfolie an das Einlegeorgan anlegt, wonach man dann die seitlichen Enden der Hüllfolie gespannt um das Einlegeorgan legt, während man gleichzeitig die Hüllfolie an das Einlegeorgan ansaugt. So läßt sich eine lagerichtige und faltenfreie Positionierung der Hüllfolie an dem Einlegeorgan erreichen, wodurch die Funktionssicherheit des Verfahrens und damit die zugleich auch die Produktionsgeschwindigkeit erhöht wird.

Besonders vorteilhaft ist es, wenn man gleichzeitig mit dem Einlegen der Hüllfolie in die eine Formhälfte ein fertig gespritztes Werkstück in gleicher Weise aus der anderen Formhälfte entnimmt. Auf diese Weise kostet die Entnahme des fertigen Werkstücks keine zusätzliche Zeit. Außerdem kann durch die zwangsgesteuerte Entnahme das Werkstück eine gezielte Orientierung für die sich anschließende Abstapelung der Werkstücke, insbesondere Becher, erreicht werden.

Für das zeitgleiche Einlegen der Hüllfolie und Herausnehmen eines fertigen Werkstücks ist es günstig, wenn man das Einlegeorgan seitlich einschwenkt, und wenn man das fertig gespritzte Werkstück zur gegenüberliegenden Seite des Werkzeuges entnimmt.

Im folgenden werden zwei Ausführungsbeispiele des erfindungsgemäßen Verfahrens anhand einer in der Zeichnung dargestellten Einlege- und Entnahmevorrichtung näher erläutert. Es zeigen:

**Figur 1** eine schematische Seitenansicht der Werzeugteile eines ersten Ausführungsbeispiels einer Kunststoff-Spritzgußmaschine;

**Figur 2** eine schematische Draufsicht auf eines der Spritzgußwerkzeuge der mit Einlege- und Entnahmeorgan dafür versehenen Kunststoff-Spritzgußmaschine bei geöffnetem Werkzeug;

**Figur 3** eine Ansicht von unten des in Figur 2 von oben gezeigten Spritzgußwerkzeugs, ebenfalls bei geöffneter Spritzgußform;

**Figur 4** eine der Figur 2 entsprechende schematische Draufsicht auf eines der Spritzgußwerkzeuge einer zweiten Ausführungsform einer Kunststoff-Spritzgußmaschine bei geöffnetem Werkzeug und eingebrachtem Einlege- und Entnahmeorgan;

**Figur 5** einen Schnitt durch die geöffnete Spritzgußform entlang der Linie V-V in Figur 4;

**Figur 6a - 6c** Teildarstellungen des Entnahmeorgans in drei verschiedenen und aufeinanderfolgenden Betriebsstellungen dieses Organs.

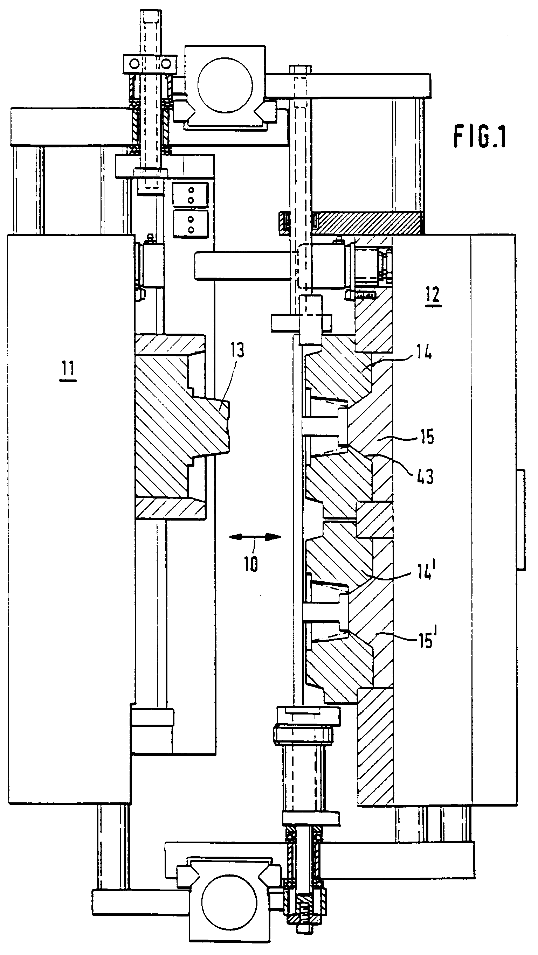

Die Fig. 1 bis 3 zeigen zwei in Richtung des eingezeichneten Doppelpfeiles 10 relativ zueinander verstellbare Werkzeugteile 11 und 12 einer Kunststoff-Spritzgußmaschine. Jedes Werkzeugteil ist mit mindestens einer Formhälfte versehen, die mit einer zweiten Formhälfte auf dem anderen Werkzeugteil zusammenwirkt. So ist das Werkzeugteil 11 mit einer Formpatrize 13 besetzt, die mit einer dazu passenden Formmatrize 14 und einem Formboden 15, die beide auf dem Werkzeugteil 12 angeordnet sind, zusammenwirkt. Die Formpatrize 13 und die Formmatrize 14 mit dem Formboden 15 bilden zusammen eine Spritzgußform für die Herstellung von Kunststoffbechern. In Fig. 1 ist noch eine zweite gleiche Formmatrize 14' mit Formboden 15' auf dem Werzeugteil 12 dargestellt.

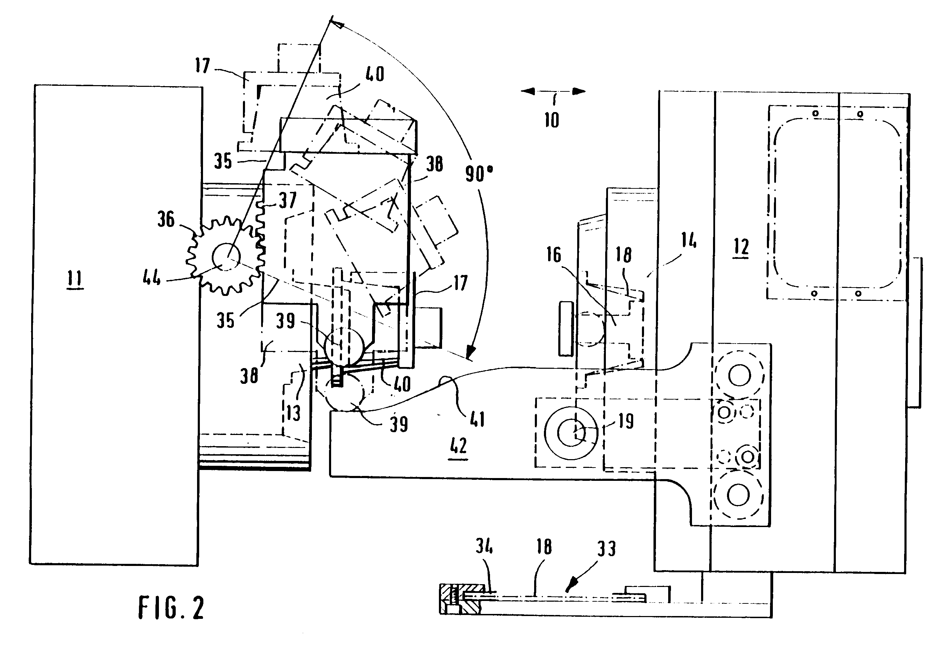

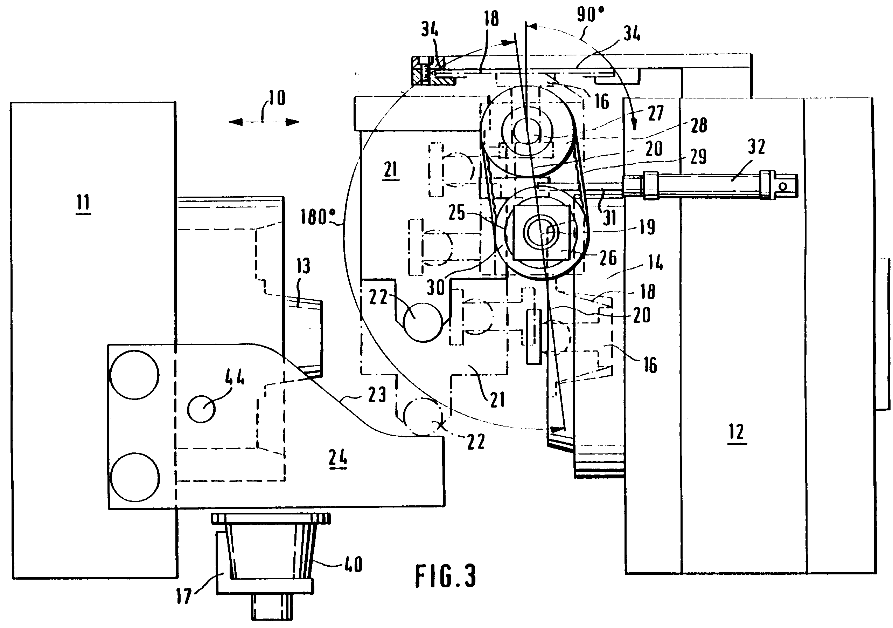

Die Einlege- und Entnahmevorrichtung der Spritzgußmaschine weist für jede Spritzgußform ein gesondertes Einlegeorgan in Form eines Saugstempels 16 und ein gesondertes Entnahmeorgan in form einer Saughalteschwinge 17 auf, die in den Fig. 2 und 3 dargestellt sind. Der Saugstempel 16 dient zum Einlegen eines bedruckten Hüllfolienabschnittes 18 in die Formmatrize 14 und ist auf einem am Werkzeugteil 12 auf einer Achse 19 verschwenkbar gelagerten und in Fig. 3 nur durch eine Achslinie angedeuteten Schwenkarm 20 angeordnet. Die Schwenkbewegung des Schwenkarmes 20 um 180° wird mittels eines in Fig. 3 dargestellten, in nicht gezeigter Weise ebenfalls am Werkzeugteil 12 gelagerten Schiebers 21 bewirkt, der mit einer Laufrolle 22 gegen eine Steuerkurve 23 anliegt, die an einem mit dem verstellbaren Werkzeugteil 11 fest verbundenen Kurvensteg 24 ausgebildet ist. Am Schieber 21 ist eine Zahnstange 25 ausgebildet, die in Eingriff mit einem auf der Schwenkachse 19 befestigten Zahnrad 26 steht, über welches dem Schwenkarm 20 die Verschwenkbewegung erteilt wird.

Der Saugstempel 16 ist auf dem Schwenkarm 20 um eine Achse 27 drehbar gelagert, auf welcher eine Zahnriemenscheibe 28 befestigt ist. Diese Zahnriemenscheibe ist über einen Zahnriemen 29 mit einer auf der Schwenkachse 19 frei drehbar gelagerten Zahriemenscheibe 30 antriebsmäßig verbunden. Die Zahnriemenscheibe 30 ist mit der Kolbenstange 31 eines Verstellzylinders 32 gekoppelt, mit dessen Hilfe dem Saugstempel 16 eine zusätzliche Drehbewegung um 90° erteilt wird. Der Saugstempel 16 ist in Fig. 3 in verschiedenen Schwenkstellungen dargestellt und wird durch die Schwenkbewegung des Schwenkarmes 20 zwischen der Formmatrize 14 und einer Ladestelle 33 bewegt, wo eine vorbedruckte Folienbahn 34 zugeleitet wird, von welcher in nicht dargestellter Weise die Hüllfolienabschnitte 18 abgetrennt werden.

Fig. 2 zeigt die Anordnung des als Saugehalteschwinge 17 ausgebildeten Entnahmeorganes. Die Saughalteschwinge 17 ist auf dem Werkzeugteil 11 auf einem um eine Achse 44 drehbaren und ebenfalls nur als Achslinie angedeuteten Schwenkarm 35 befestigt. Sie hat eine Winkelform und dient zum Erfassen eines auf der Formpatrize 13 sitzenden, fertig gespritzten Kunststoffbechers 40. In Fig. 2 ist die Saughalteschwinge 17 in verschiedenen Schwenkstellungen eingezeichnet. Der Schwenkarm 35 läßt sich um einen Winkel von 90° verschwenken. Hierzu ist auf der Schwenkachse 44 ein Zahnrad 36 befestigt, das mit einer Zahnleiste 37 in Eingriff steht, die an einem in nicht dargestellter Weise am Werkzeugteil 11 längsverschiebbar gelagerten Schieber 38 ausgebildet ist. Der Schieber 38 ist mit einer Laufrolle 39 in Anlage gegen eine Steuerkurve 41 gehalten, die an einem mit dem Werkzeugteil 12 fest verbundenen Kurvensteg 42 ausgebildet ist.

Während der Auffahrbewegung der beiden Werkzeugteile 11 und 12 werden die beiden Schwenkarme 20 und 35 durch die kurvengesteuerten Schieber 21 und 38 um ihre Drehachsen 19 und 44 bewegt. Beim dargestellten Ausführungsbeispiel sind beide Schieber 21 und 38 Teile eines Druckluftzylinders und stehen unter Druck, der die Schieber 21 und 38 mit ihrer Laufrolle 22 und 39 immer in Anlage gegen die Steuerkurve 23 oder 41 hält. Während des Öffnens der Form bis in die aus den Fig. 2 und 3 ersichtliche volle Öffnungsstellung wird der Saugstempel 16 mit einem an der Ladestelle 33 erfaßten Hüllfolienabschnitt einwärts bis in die Formmatrize 14 bewegt. Dort wird der Hüllfolienabschnitt 18 vom Saugstempel 16 freigegeben und mittels einer nicht dargestellten Saugeinrichtung des Werkzeugteiles 12, die in dem zwischen der Formmatrize 14 und dem Formboden 15 befindlichen Spalt 43 (Fig. 1) wirksam wir, in der Formmatrize 14 gehalten. Gleichzeitig ist mit dem Schwenkarm 35 die Saughalteschwinge 17 bis zur Formpatrize 13 einwärts verschwenkt worden, wo sie den noch auf der Formpatrize 13 sitzenden gespritzten Kunststoffbecher 40 erfaßt. Bei der Schließbewegung der Form, bei welcher die beiden Werkzeugteile 11 und 12 gegeneinander bewegt werden, werden der Saugstempel 16 und die Saughalteschwinge 17 wieder nach außen zurückverschwenkt, wobei die Saughalteschwinge 17 den Kunststoffbecher 40 in eine äußere Abwurfstellung bringt.

Sowohl der Saugstempel 16 als auch die Saughalteschwinge 17 können in nicht dargestellter Weise mit Sensoren einer Steuer- und Überwachungseinrichtung der Kunststoff-Spritzgußmaschine besetzt sein, die feststellen, ob die beiden Organe ordnungsgemäß mit Werkstücken belegt sind oder nicht.

Es versteht sich, daß die Verschwenkbereiche der Schwenkarme 20 und 35 und auch der Drehwinkel des Saugstempels auf andere passende Werte eingestellt sein können.

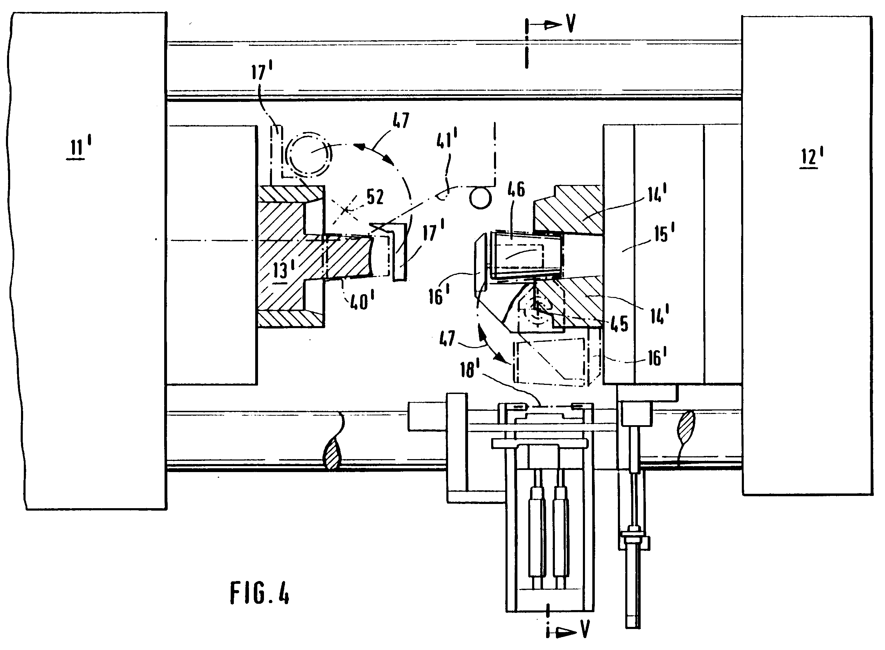

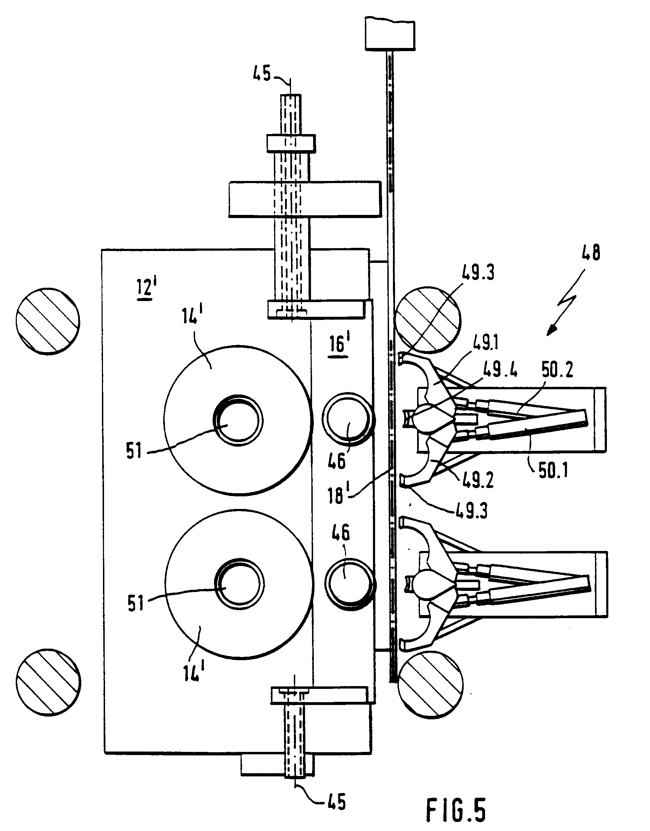

Die Fig. 4 bis 6 zeigen die relativ zueinander verstellbaren Werkzeugteile 11' und 12' einer Kunststoff-Spritzgußmaschine, bei welcher das Einlegeorgan und das Entnahmeorgan anders als bei dem Ausführungsbeispiel nach den Fig. 1 bis 3 gestaltet sind. In den Zeichnungen sind vergleichbare Vorrichtungsteile mit den gleichen Bezugsziffern wie in den Fig. 1 bis 3, ergänzt durch einen Indexstrich, bezeichnet. Auch hier bilden eine Formpatrize 13' und eine Formmatrize 14' mit dem Formboden 15' zusammen eine Spritzgußform für die Herstellung von konischen Kunststoffbechern. In Fig. 5 ist noch eine zweite gleiche Formmatrize 14' auf dem Werkzeugteil 12' dargestellt.

Das Einlegeorgan 16' hat die Form einer um eine Achse 45 verschwenkbaren Platte, auf welcher für jede Formmatrize 14' ein konischer Saughaltedorn 46 angeordnet ist. Die Schwenkbewegung der Platte 16' des Einlegeorganes wird wieder mittels starr mit einem der Formteile verbundenen Steuerkurven bewirkt, auf deren Darstellung in der Zeichnung verzichtet worden ist. In Fig. 4 ist lediglich eine Steuerkurve 41' für das als Saughalteschwinge 17' ausgebildete Entnahmeorgan angedeutet. Einlegeorgan 16' und Entnahmeorgan 17' sind in Fig. 4 in ihrer inneren Endstellung mit voll ausgezogenen Strichen eingezeichnet. Ihre äußere Endstellung ist mit strichpunktierten Linien, und ihr Schwenkbereich ist durch einen Kreisbogen und jeweils einen Doppelpfeil 47 eingetragen.

Der Einlege- und Entnahmevorrichtung ist eine Beladevorrichtung 48 für die Saughaltedorne 46 zugeordnet. Die Beladevorrichtung 48 weist für jeden Saughaltedorn 46 eine Greifvorrichtung mit zwei um eine gemeinsame Achse verschwenkbaren Greifarmen 49.1 und 49.2 auf. Die freien Enden 49.3 der verschwenkbaren Greifarme sind als Saughaltestellen für die anzulegenden bedruckten Hüllfolienabschnitte 18' ausgebildet, die zuerst mit einem zentralen Drucksteg 49.4 des Greifers 49 gegen den Saughaltedorn zur Anlage gebracht werden, bevor sie mittels der einzeln mittels pneumatischer Kolben/Zylinder-Anordnungen 50.1 und 50.2 bewegten Greifarme 49.1 und 49.2 um den konischen Saughaltedorn 46 herumgelegt werden. Die verwendete Greiferkonstruktion erlaubt ein sehr lagegenaues Anlegen der bedruckten Hüllfolienabschnitte 18', die mittels der Saughaltedorne 46 auch entsprechend lagegenau in die konische Öffnung 51 der Formmatrize 14' eingebracht werden.

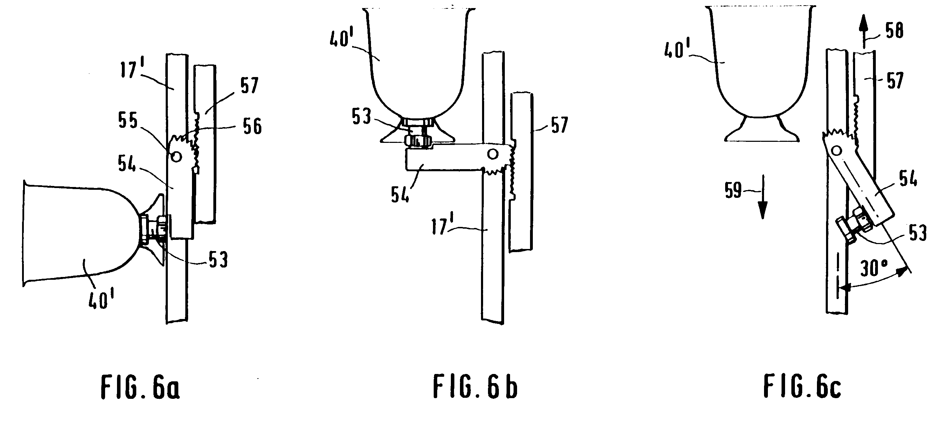

Das Entnahmeorgan in Form einer Saughalteschwinge 17',, die um eine in Fig. 4 eingezeichnete Drehachse 52 verschwenkbar gelagert ist und deren Schwenkbewegung durch die Steuerkurve 41' erzielt wird, erbringt bei der Entnahme eines fertiggespritzten und mit dem Hüllfolienabschnitt versehenen Kunststoffbechers 40' ein Drehen des Bechers um 90° in einer senkrecht zur Schwenkebene gerichteten Ebene. Hierzu ist gemäß den Fig. 6 der den Kunststoffbecher 40' an seinem Fußteil zentral erfassende Saughalter 53 am Ende eines Schwenkhebels 54 angeordnet, der mit seinem anderen Ende um eine Achse 55 in der Saughalteschwinge 17' verschwenkbar gelagert ist. Der Schwenkhebel 54 ist mit einem koaxialen Zahnkranz 56 versehen, der mit einer relativ zur Saughalteschwinge 17' beweglichen Zahnstange 57 in Eingriff steht. Die Zahnstange 57 ist in nicht dargestellter Weise mit dem Schwenkmechanismus der Saughalteschwinge 17' mechanisch so gekoppelt, daß ihre Relativbewegung gegenüber der Saughalteschwinge 17' in Abhängigkeit von deren Schwenklage und so erfolgt, daß in der in Fig. 6a dargestellten inneren Schwenklage der Saughalteschwinge 17' der Schwenkhebel 54 in die Richtung der Saughalteschwinge 17' ausgerichtet ist, in der in Fig. 6b ersichtlichen äußeren Endstellung jedoch eine Lage senkrecht zur Saughalteschwinge 17' einnimmt. In dieser Stellung wird dann der Unterdruck am Saughalter 53 abgeschaltet und der Schwenkhebel 54 durch eine Rückverstellung der Zahnstange 57 in Richtung des Pfeiles 58 in die aus Fig. 6c ersichtliche Stellung zurückgezogen. Dadurch kann der freigegebene Kunststoffbecher 40' in einer stapelgerechten Lage in Richtung des Pfeiles 59 in einen Stapelschacht abfallen.

Auch bei der Ausführungsform der Einlege- und Entnahmevorrichtung nach den Fig. 4 bis 6 können das Einlegeorgan und das Entnahmeorgan in nicht dargestellter Weise mit Sensoren einer Steuer- und Überwachungseinrichtung der Kunststoff-Spritzgußmaschine besetzt sein, mit deren Hilfe feststellbar ist, ob die beiden Organe ordnungsgemäß mit Werkstücken belegt sind oder nicht.

**Patentansprüche**

1. Verfahren zum Einlegen einer Hüllfolie in eine Formhälfte (14, 14'), insbesondere eine Matrize, eines Werkzeuges einer Spritzgußmaschine, bei dem die Hüllfolie (18, 18') bei geöffnetem Werkzeug in den Raum zwischen den beiden Formhälfte (13, 14; 13', 14') einbringt und von dort in eine der Formhälften (12, 12') einlegt, **dadurch gekennzeichnet**, daß man die Hüllfolie (18, 18') bereits außerhalb des Werkzeuges auf einem Einlegeorgan (16; 16') lösbar fixiert und dann das Einlegeorgan mit seinem Schwerpunkt ausschließlich auf einer zumindest annähernd kreisförmigen Bahn von außerhalb des Werkzeuges bis in die eine Formhälfte (14, 14') schwenkt, wobei die Einschwenkbewegung über eine ein- und ausrückbare Kupplung mit der Öffnungs- und Schließbewegung des Werkzeugs zwangsweise gekoppelt ist.

2. Verfahren nach Anspruch 1, **dadurch gekennzeichnet**, daß man das Einlegeorgan (16) auf der Kreisbahn parallel zu sich selbst bewegt.

3. Verfahren nach Anspruch 1 oder 2, **dadurch gekennzeichnet**, daß man die Hüllfolien (18; 18') beim Transport auf dem Einlegeorgan festsaugt und beim Einlegen in die Formhälfte (14; 14') von dem Einlegeorgan (16; 16') abbläst.

4. Verfahren nach einem der Ansprüche 1 bis 3, **dadurch gekennzeichnet**, daß man, insbesondere bei der Herstellung im wesentlichen zylindrischer Becher, die Hüllfolien (18; 18') beim Anbringen an das, vorzugsweise als Saughaltedorn ausgebildete, Einlegeorgan (16; 16') an ihren Enden gespannt hält und zunächst ungefähr mit der Mitte der Hüllfolie (18; 18') an das Einlegeorgan (16; 16') anlegt, wonach man dann die seitlichen Enden der Hüllfolie (18; 18') gespannt um das Einlegeorgan (16; 16') legt, während man gleichzeitig die Hüllfolie (18; 18') an das Einlegeorgan (16; 16') ansaugt.

5. Verfahren nach einem der Ansprüche 1 bis 4, **dadurch gekennzeichnet**, daß man gleichzeitig mit dem Einlegen der Hüllfolie (18; 18') in die eine Formhälfte (14; 14') ein fertig gespritztes Werkstück (40) in gleicher Weise aus der anderen Formhälfte (13; 13') entnimmt.

6. Verfahren nach Anspruch 5, **dadurch gekennzeichnet**, daß man das Einlegeorgan (16; 16') seitlich einschwenkt, und daß man das fertig gespritzte Werkstück (40) zur gegenüberliegenden Seite des Werkzeuges entnimmt.

FIG.1

FIG. 2

FIG.3

FIG.4

FIG.5

FIG. 6a

FIG. 6b

FIG. 6c

EP 0 499 676 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| E | EP-A-415 153 (SYSTEC RATIONALISIERUNGSTECHNIK KNAUER)<br>* das ganze Dokument *<br>--- | 1-6 | B29C45/14<br>B29C45/42 |
| Y | US-A-4 359 314 (HELLMER)<br>* das ganze Dokument *<br>--- | 1,3-5 | |
| Y | US-A-4 355 967 (HELLMER)<br>* das ganze Dokument *<br>--- | 1,3 | |
| Y | US-A-4 368 018 (REES ET AL.)<br>* Spalte 6, Zeile 49 - Spalte 7, Zeile 7;<br>Anspruch 1; Abbildungen 10-12 *<br>--- | 1,5 | |
| Y | PATENT ABSTRACTS OF JAPAN<br>vol. 9, no. 7 (M-350)(1730) 12. Januar 1985<br>& JP-A-59 156 562 (TOSHIBA KIKAI )<br>* das ganze Dokument *<br>--- | 1 | |
| Y | EP-A-398 044 (HUSKY INJECTION MOLDING SYSTEMS LTD.)<br>* das ganze Dokument *<br>--- | 1 | RECHERCHIERTE SACHGEBIETE (Int. Cl.5 ) |
| Y | US-A-3 899 277 (WINTER)<br>* das ganze Dokument *<br>--- | 4 | B29C |
| A | FR-A-2 606 702 (DROMIGNY)<br>* das ganze Dokument *<br>--- | 1,5 | |
| A | FR-A-2 606 701 (DROMIGNY)<br>* das ganze Dokument *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 03 OCTOBER 1991 | BOLLEN J.A.G. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes
    Dokument

EPO FORM 1503 03.82 (P0403)